# EUROPEAN PATENT SPECIFICATION

(11) **EP 1 393 559 B1**
(45) Date of publication and mention of the grant of the patent: **13.06.2012**
(21) Application number: 01274124.5
(22) Date of filing: 31.12.2001
(51) Int. Cl.: H04N 7/173, H04N 7/24

(54) **DIGITAL BROADCASTING SYSTEM AND METHOD OF CONTROLLING THE SAME**
DIGITALES RUNDSENDESYSTEM UND VERFAHREN ZU SEINER STEUERUNG
SYSTEME DE DIFFUSION NUMERIQUE ET PROCEDE DE COMMANDE DE CE SYSTEME

(30) Priority: 17.04.2001 KR 2001020378
(43) Date of publication of application: 03.03.2004
(73) Proprietor: LG Electronics, Inc., Seoul 150-875 (KR)
(72) Inventor: PARK, Sang-Hyun, Kwangju 503-821 (KR); JEONG, Hye-Cheun, Daegu 705-831 (KR)
(74) Representative: Ekström, Nils
(86) International application number: PCT/KR2001/002312
(87) International publication number: WO 2002/085015

(56) References cited:
- EP-A- 0 757 485
- EP-A- 0 901 284
- EP-A- 0 915 621
- WO-A-96/13124
- WO-A-02/058399
- WO-A1-99/48292
- DE-A1- 4 427 046
- KR-A- 99 040 044
- DAKSS J ET AL: "HYPERLINKED VIDEO" PROCEEDINGS OF THE SPIE - THE INTERNATIONAL SOCIETY FOR OPTICAL ENGINEERING, SPIE, PO BOX 10 BELLINGHAM WA 98227-0010 USA, vol. 3528, 1 November 1999 (1999-11-01), pages 2-10, XP000986761 ISSN: 0277-786X
- BACH U ET AL: "MULTIMEDIA-TERMINAL ALS ENDGERAET" FUNKSCHAU, WEKA FACHZEITSCHRIFTEN VERLAG, POING, DE, vol. 68, no. 6, 1 March 1996 (1996-03-01), pages 70-75, XP000556486 ISSN: 0016-2841

## Description

### Technical Field

The present invention relates to a digital broadcasting system. In particular, the present invention relates to a digital broadcasting system and a method of controlling the same, which enable the television (TV) viewers to email and manage the additional information they found during watching TV.

### Background Art

The history of broadcasting goes back to a black-and-white television. Later, it was replaced with a color analogue television broadcast. Now, the era of a digital television broadcast has already arrived.

A digital television broadcast, unlike the related analogue television broadcast, is characterized as a next generation broadcasting technologies, such as, two-way application, regeneration and storage, and it encodes signals of information and compresses the TV signals to a digital format.

The related analogue television broadcast could transmit a picture through one radio wave only, and transmit sound through another radio wave. However, the digital television broadcast can transmit a plurality of pictures and sound through one radio wave, and compress much information maintaining the best quality. Therefore, if the conventional analogue television broadcast could designate only one channel to one frequency, the digital television broadcast can designate 4-8 channels to one frequency. Also, a viewer can easily control information by using a computer, and a broadcast station can put the information on the air in response to the order of the viewer.

Pursuant to the digital broadcast, a digital TV is needed. The digital TV converts broadcast signals to digital signals, thereby enabling to generate a high quality pictures and adding a plurality of various functions, and it sometimes is called as a third generation TV following a black-and-white TV and a color TV. The digital TV has a separate integrated circuit (IC) for a plurality of functions, i.e., converting the analogue signals transmitted from a broadcasting station to digital signals, which not only prevents degradation of picture and sound signals but also restores them precisely. Thus, no more double pictures that used to be generated due to the reflection of analogue radio wave do exist and viewers can enjoy clear sound free of unnecessary noise. In addition, the digital TV has scanning lines as many as 1,050 so that the pictures are much more clear, and it has memory and process functions of broadcast signals making multichannel. In this way, the TV viewers can watch 2-3 programs from different broadcasting stations on a TV screen at the same time. Also, they can hold a momentary action and magnify it to see in more detail, confirm or print out the memorized action at any time.

Despite of the above listed advantages of the digital broadcasting and the digital TV, it is still questionable to find out whether or not a great deal of information can be saved in the digital TV, as it is easily done in a computer. Although there has been an attempt to install a hard - disc drive into the TV, it turned out to be ineffective because of the differences in picture, sound and data information.

### Disclosure of Invention

It is, therefore, an object of the present invention which is set out in the claims, to provide a digital broadcasting system and a method of controlling of the same, through which a viewer can request a broadcasting station to send an e-mail regarding additional information on TV he or she wishes to save into a particular address.

It is another object of the present invention to provide a digital broadcasting system and a method of controlling the same, through which a viewer can directly send an e-mail regarding additional information on TV he or she wishes to save into a particular address, without going through a broadcasting station.

To achieve the above objects, a preferred embodiment of the present invention provides a method for transmitting additional information in a picture display unit, the method comprising the steps of separating additional information from data information; outputting the additional information on a screen in response to a request of a viewer for confirming additional information; recognizing the request of a viewer for transmitting additional information; transmitting the request of the viewer for additional information to a broadcasting station; and having the broadcasting station transmit the additional information requested of the viewer to a particular e-mail address.

According to the above-described method for transmitting additional information of the picture display unit, the data information includes at least one of video information, audio information, additional information and a destination address, and a request for the additional information can be transmitted via network based on the destination address.

Moreover, the outputs video and audio information, separated from the data information, respectively, and based on the outputted video information, it is decided whether of not additional information exists. If it is decided that there exists additional information, an identifier of additional information existence is displayed on the screen.

As to outputting the additional information, the method further comprises a TV browser that is operated in response to the request confirming of the additional information existence, and assigns the TV browser to a picture region and an additional information region. The video information and the additional information can be outputted in correspondence to the picture region and the additional information region.

Another preferred embodiment of the present invention provides a method for transmitting additional information from a broadcasting station, the method comprising the steps of receiving a request for transmitting of additional information from the picture display unit, where the request includes a destination address, additional information identifier and e-mail address; inquiring of additional information from database by using the additional information identifier; and transmitting the additional information inquired to the e-mail address.

According to the above method for transmitting additional information from the broadcasting station, the additional information is saved in correspondence with the additional information identifier, and the request for transmitting the additional information can be received to a broadcasting station corresponding to the destination address.

Still another preferred embodiment of the present invention provides a method for transmitting additional information of a picture display unit, the method comprising the steps of separating additional information from data information and saving the additional information; displaying the additional information on a screen in response to a request of a viewer; recognizing a request for additional information from the viewer; and transmitting the additional information fetched based on the request.

According to the above method, the request for transmitting additional information includes additional information identifier and e-mail address.

Further, the viewer confirms an identifier of the additional information he or she requested, fetches additional information corresponding to the identifier from memory, and transmits the fetched additional information to the e-mail address.

Yet another preferred embodiment of the present invention provides a picture display unit, which comprises a data processing means for separating data information inputted through a receiving apparatus, and during the TV browser is being performed, mapping video information and addition information to be displayed on each region of the TV browser; a controlling means for saving the additional information separated from the data processing means, and transmitting a request for transmitting the additional information by the viewer to contents server; a saving means for saving the additional information separated from the data information to a corresponding destination address; and an inputting means for inputting the request by the viewer.

Yet another preferred embodiment of the present invention provides a broadcasting station system, which comprises a receiving means for delivering data information; a contents server for fetching audio information, video information, additional information and a destination address, compressing the additional information and the destination address after converting the audio and video information to digital signals, and in case of receiving a request for transmitting additional information from the picture display unit, inquiring the additional information based on the additional information identifier and transmitting the inquired additional information to an e-mail address; and a data base for saving audio information, video information, additional information, and a destination address, having the additional information correspond to each designated identifier.

Yet another preferred embodiment of the present invention provides a picture display unit, comprising: a data processing means for separating data information inputted through a receiving apparatus, and during the TV browser is being performed, mapping video information and addition information to be displayed on each region of the TV browser; a controlling means for saving the additional information separated from the data processing means, and transmitting a request for transmitting the additional information by the viewer to contents server; and a saving means for saving the additional information separated from the data information to a corresponding identifier.

According to the above-described picture display unit, if a request for transmitting the additional information is inputted, the controlling means further discriminates additional information outputted through a present TV browser, and fetches the additional information corresponding to the identifier by using an additional information identifier that is already memorized.

### Brief Description of Drawings

The above objects, features and advantages of the present invention will become more apparent from the following detailed description when taken in conjunction with the accompanying drawings, in which:
Figure 1 is a block diagram illustrating a digital broadcasting system according to a preferred embodiment of the present invention;
Figures 2a and 2b are flow charts explaining methods for transmitting additional information requested of a viewer from a broadcasting station to a particular e-mail address according to the digital broadcasting system of a preferred embodiment of the present invention;
Figures 3a through 3e are exemplary views of a screen on which data information including additional information is outputted according to the digital broadcasting system of a preferred embodiment of the present invention;
Figure 4 is a block diagram illustrating a digital broadcasting system according to another preferred embodiment of the present invention; and
Figures 5a and 5b are flow charts explaining methods for transmitting additional information requested of a viewer directly to a particular e-mail address according to the digital broadcasting system of another preferred embodiment of the present invention.

### Best Mode for Carrying Out the Invention

A preferred embodiment of the present invention will now be described with reference to the accompanying drawings.

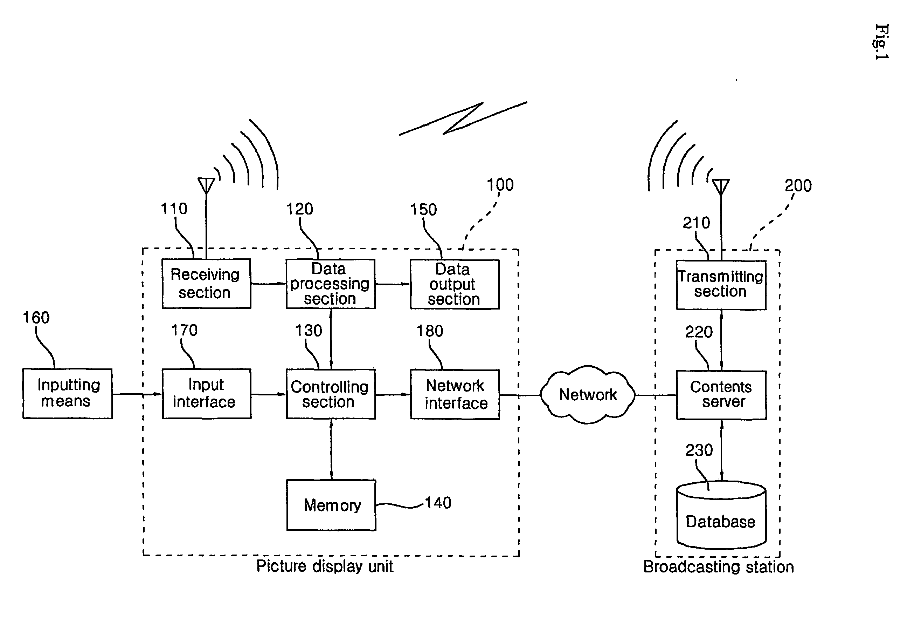

Figure 1 is a block diagram illustrating a digital broadcasting system according to a preferred embodiment of the present invention.

Referring to Figure 1, the digital broadcasting system includes a picture display unit 100 for displaying data information on a screen, a broadcasting station 200 for providing the data information, and an inputting means 160 for inputting a request of a viewer. Here, the inputting means 160 is an apparatus to be used for a viewer when he or she makes a request to the picture display unit 100, and includes a wireless keyboard, a wireless mouth, a wireless joystick, and a remote control. Using bluetooth technology can use the wireless keyboard and mouth for communication with the picture display unit 100. Since the bluetooth technology is widely known, the details are not provided here.

The picture display unit 100 includes a receiving section 110, a data processing section 120, a controlling section 130, a memory 140 and a data output section 150. The picture display unit 100 can further include an input interface 170 for delivering an order inputted through the inputting means 160 to the controlling section 130.

The receiving section 110 receives data information transmitted from the broadcasting station 200. Here, the data information includes video information, audio information, additional information (e.g., characters, figures or graphics) and a destination address. The additional information can be made out one of HTML, DHTML, XML, or SGML. The destination address indicates an address of a contents server 220 installed in the broadcasting station 220, managing the data information. Later, if the viewer sends an e-mail regarding additional information via the broadcasting station 200, and requests for transmitting additional information from the contents server 220 through the picture display unit 100, the destination address is used to help the viewer to connect through a network.

The data processing section 120 classifies data information inputted from the receiving section 110 into audio information, video information, additional information and a destination address. The audio and video information are converted for output through the data output section 150. Here, the data output section 150 can comprise a speaker for outputting the audio information and a display device for outputting the video information. The display device is comprised of one of LCD (Liquid Crystal Device), PDP (Plasma Display Panel), VFD (Vacuum Florescent Display), and FED (Field Emission Display). In addition, when a TV browser is performed at the request of a viewer for confirming additional information, the data processing section 120 conducts mapping for the video and additional information to be outputted to a picture region and additional information region in the TV browser.

The controlling section 130 saves additional information separated from the data processing section 120 to a memory, and transmits the additional information to the data processing section 120 whenever there is a request of a viewer for confirming additional information. Also, the controlling section 130 receives a request for transmitting additional information from the viewer and transmits the request to a contents server 220 through a network interface 180. Here, the request for transmitting additional information can include the destination address, an additional information identifier, and an e-mail address. In order to discriminate a plurality of additional information, the identifier can be transmitted beforehand together with the data information at the time of transmission of the data information from the broadcasting station 200.

The memory 140 saves additional information separated from the data information to make the additional information be in correspondence with the destination address, outputs the additional information through the data output section 150, and saves a TV browser for providing the surrounding through which a request of a viewer and the additional information are transmitted to the contents server 220 through a network. The TV browser is activated by the controlling section 130 and outputs the video information and the additional information through the data output section 150.

As aforementioned, the data output section 150 outputs the video and audio information separated from the data processing section 120 upon receiving an output signal from the controlling section 130, and includes a speaker and a display device. Thus, the speaker outputs the audio information and the display device outputs the video information. Also, the data output section 150 provides a browser screen to display additional information in case that the TV browser is activated, so the additional information and video information can be displayed together on the browser screen.

In the meantime, the broadcasting station 200 is comprised of a transmitting section 210 for transmitting data information, a contents server 220 for outputting the data information, and a database for saving the data information. Here, the data information, as described above, can include audio information, video information, additional information and a destination address. The audio and video information are converted to digital signal before they are sent to the transmitting section 210, and the converted signal can be compressed together with the additional information and the destination address. This compressed data information is outputted through the transmitting section 210. Later, a receiving section 110 of a picture display unit 100 can receive the outputted data information.

The contents server 220 fetches audio information, video information, additional information, and a destination address saved in the database 230, and after converting the audio and video information to digital signal, compresses the converted audio and video information together with the additional information and the destination address. The contents server 220, when there is a request for transmitting additional information from the picture display unit 100, inquires additional information based on an additional information identifier included to the request. The contents server 220 sends the inquired additional information to an e-mail address that is included to the request.

The database 230 saves audio information, video information, additional information and a destination address for transmitting to the picture display unit 100. The additional information is discriminated by an identifier. That is, the additional information is saved in correspondence with the identifier because when there is a request for transmitting additional information from the picture display unit 100, the additional information is retrieved by using an identifier included in the request.

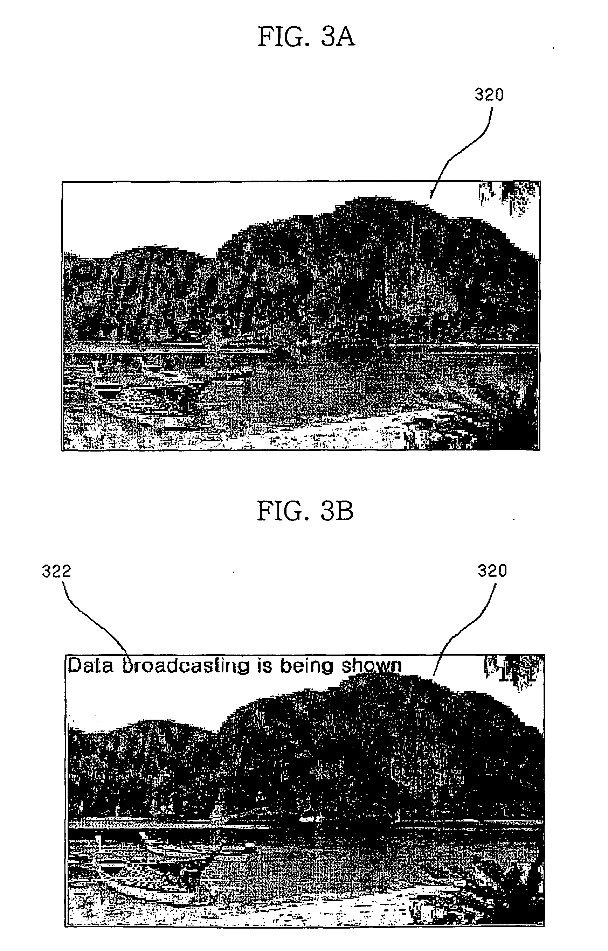

Figures 3a through 3e are exemplary views of the screen on which data information including additional information is outputted according to the digital broadcasting system of a preferred embodiment of the present invention.

Referring to Figure 3a, the screen is where video information is outputted. The screen includes a picture region 320 for outputting particularly the video information among others, such as, audio information, video information, additional information and destination address, which are separated from the data processing section based on the data information received from the broadcasting station.

On the screen shown in Figure 3b, there is an additional information existence display region 322 located at a designated position of the upper portion of the picture region 320 where the video information is outputted, in order to inform the viewers that video information putted on air currently has additional information. For example, the additional information existence display region 322 can display a character message like "There is data broadcasting." Moreover, the additional information existence display region 322 can use other types of discrimination items, such as, a character, a graphic or an icon to notify that there is additional information.

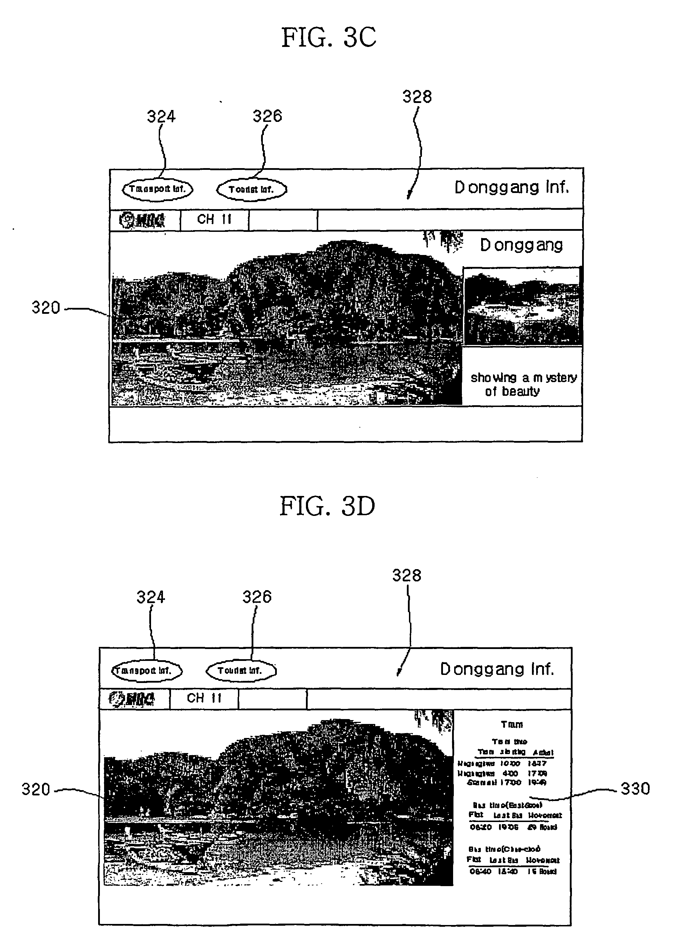

The screen of Figure 3c shows a situation where a viewer makes a request for additional information menu through an inputting means when he or she finds out that there is additional information. The screen is a TV browser screen and besides to a picture region, it further comprises an additional information region 328 to display additional information together with video information on the screen. The additional information menu includes traffic information item 324 and travel information item 326. Further, the screen can display the name of the broadcasting station who has put video information on air at the present time, e.g., 'MBC', and the channel number corresponding to the broadcasting station. Therefore, a viewer can select one of the items (324 or 326) if he or she wants more details.

Referring to Figure 3d, the screen shows detailed contents selected by the viewer among the additional information menu. For instance, if the viewer selects the traffic information item using an inputting means, traffic information contents 330 are displayed on the right side of the screen.

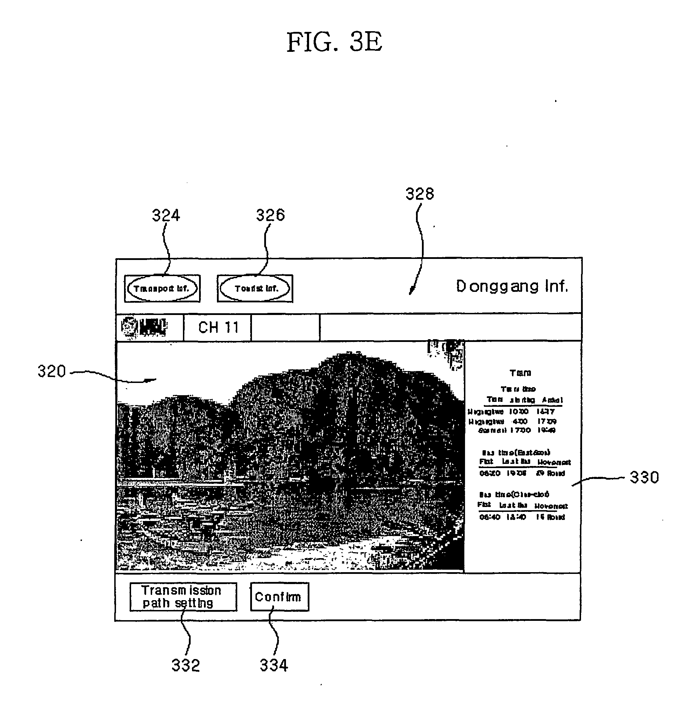

The screen in Figure 3e is provided to the viewer when he or she wishes to transmit the additional information being displayed currently via e-mail. For example, in order to help the viewer to email the traffic information contents 330 being displayed, a transmission route designating item 332 and a confirmation item 334 can be displayed at the lower portion of the screen. In other words, if the viewer wants to email the traffic information contents 330, he or she first selects a transmission route designating item 332. Once the transmission route designating item 332 is selected, the viewer is provided with a window for inputting an e-mail address where the traffic information contents 330 is supposed to be sent, and he or she inputs an e-mail address to the window. After inputting the e-mail address and designating a transmission route, the viewer selects a next confirmation item 334, so the traffic information contents 330 are transmitted to the e-mail address the viewer selected. Here, the e-mail address is what the viewer subscribed through any site, e.g., an e-mail exclusive site, a network site, a retrieval site or a broadcasting station site.

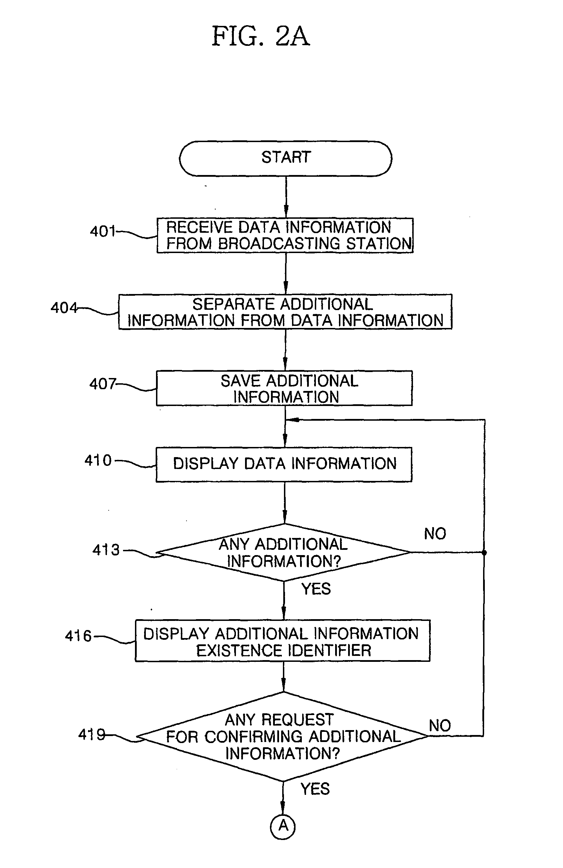

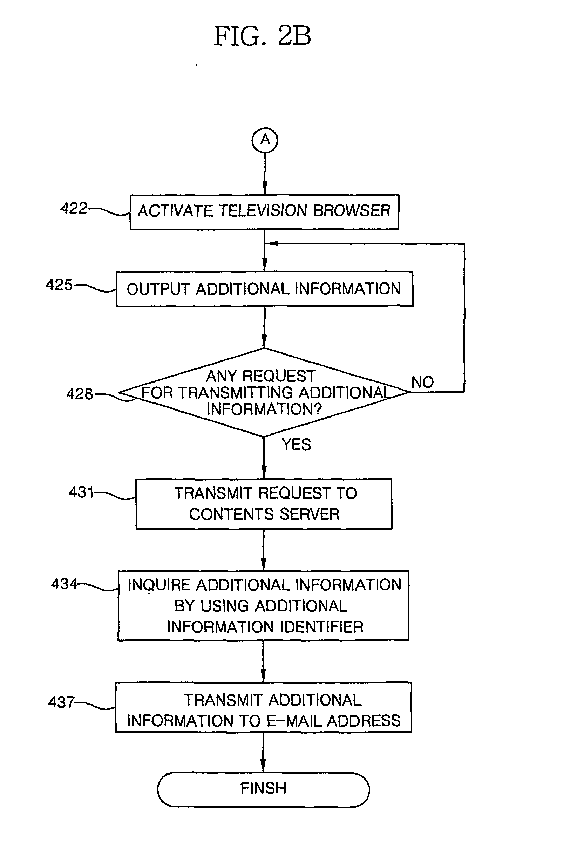

Figures 2a and 2b are flow charts explaining methods for transmitting additional information requested of the viewer from a broadcasting station to a particular e-mail address according to the digital broadcasting system of a preferred embodiment of the present invention.

As shown in the Figures, a broadcasting station receives data information (S401). Namely, a contents server of the broadcasting station fetches data information saved in a database and transmits the information through a transmitting section. Here, the data information can include audio information, video information, additional information and a destination address. The contents server fetches the above information, respectively, converts the audio and video information and later, compresses the converted audio and video information together with the additional information and the destination address. The contents server transmits the compressed data information to the transmitting section, and the transmitting section transmits the information through a public network. Then, a receiving section of a picture display unit receives the data information transmitted through the transmitting section. Here, the picture display unit is equipped with a selecting section (not shown) through which a viewer can select information he or she wants out of data information transmitted from a plurality of broadcasting stations.

When the selected data information is received through a receiving section, the data information is classified at a data processing section (S404). In other words, the data processing section classifies the data information received into audio information, video information, additional information and a destination address. Of course, the data information has to be restored before it is divided, but the procedure thereof is not explained here since it is not much related to the present invention.

The additional information classified from the step 404 is saved in a memory by a controlling section (S407). The controlling section watches the data processing section and whenever there is additional information in the separated data information, it sends the additional information to the memory for saving. Here, the memory can save the additional information to be in correspondence with an identifier enclosed together.

Among the separated data information, video and audio information are displayed through a data output section (S410). The data output section, as aforementioned, can include a speaker and a display device. Thus, the video information is outputted through a screen of the display device and the audio information is outputted to a viewer through the speaker. Of course, the display device only displays video information, not additional information yet.

Meanwhile, when video information being displayed currently is received through the receiving section, the controlling section tracks through a memory if the video information includes additional information (S413). As explained before, if there is additional information in the data information received, the data processing section classifies and saves the data information into the memory by the controlling section. Hence, the controlling section, through the memory, can decide whether or not there is additional information corresponding to the video information that is being displayed currently.

Based on the decision result, if additional information exists in the memory, the controlling section displays an additional information existence identifier on a screen of the display device (S416). At this time, the additional information existence identifier informs a viewer whether or not there is additional information, using a character, a graphic or an icon. The screen shown in Figure 3b illustrates a case in which characters are used to display the additional information existence identifier. However, it is always possible to display the additional information existence identifier through a graphic or an icon. In the meantime, if there is no additional information in the memory, the controlling section does not output the additional information existence identifier on the screen of the display device, so there is no sign of a character, a graphic or an icon anywhere on the screen.

The controlling section decides whether a viewer makes a request for confirming additional information through an inputting means (S419). If it turns out that the viewer made the request, the controlling section activates a TV browser saved in the memory in response to the request (S422). That is, in case that the additional information existence identifier is displayed on the screen of the display device while the viewer is watching TV, the viewer can make a request for confirming additional information through an inputting means including a wireless keyboard, a wireless mouth, a wireless joystick or a remote control at any time he or she wants to check the additional information. Once the request is made by the viewer, the controlling section, which has been watching over the inputting means, immediately activates a TV browser saved in the memory. The TV browser can output a browser screen through the display device at the same time the activation. Here, before being outputted through the display device, the browser screen can assign a region for video information being displayed currently and additional information that is to be added, respectively, at the data processing section. As illustrated in Figure 3c, the browser screen comprises a picture region and an additional information region.

In case that the TV browser assigns a picture region and an additional information region on the browser screen by the data processing section, the controlling section fetches additional information corresponding to video information being displayed currently from a memory, and outputs the information through the additional information region (S425). Here, the video information can be outputted through a picture region of the browser screen also.

The controlling section decides whether or not a viewer makes a request for transmitting additional information (S428). For example, by selecting an item, the viewer can obtain details on the item displayed on an additional information region, such as geography information item and a travel information item as illustrated in Figure 3c. Moreover, if the viewer wishes to send e-mail for saving the information on either item for a later use, he or she can make a request that a picture display unit should transmit additional information. As shown in Figure 3e, the viewer inputs an e-mail address he or she wants to send the additional information by using a transmission route designating item, and selects a next confirmation item, thereby activating the request for transmitting of additional information. For example, if the e-mail address the viewer wishes to send is simson0505@hanmail.net, he or she first selects the transmission route designating item and inputs the e-mail address aforementioned. When the viewer makes a request for transmitting the additional information, the controlling section decides whether there is a request of the viewer by continuously watching over the inputting means.

When it turns out that the viewer made a request for transmitting additional information, the controlling means then transmits the request to a contents server (S431). Here, the request can include a destination address, an additional information identifier, and an e-mail address. The destination address is the address of the contents server of a broadcasting station that provided additional information. The additional information is transmitted to the contents server using the destination address through the network.

In case that a request for transmitting additional information is received from the picture display unit, the contents server conducts the task based on an additional information identifier included in the additional information (S434). As mentioned earlier, the database of the broadcasting station has all additional information correspond to the identifier. Therefore, the contents server, using an additional information identifier received form the picture display unit, checks if there is the same identifier with the additional information identifier in the database.

If there is the identifier in the database, the contents server fetches additional information corresponding to the identifier, and transmits to an e-mail address (S437).

That is, when a viewer requests for transmitting additional information, the contents server immediately fetches additional information to meet the request and sends it an e-mail address, thereby helping the viewer to save all information he or she wants at any time.

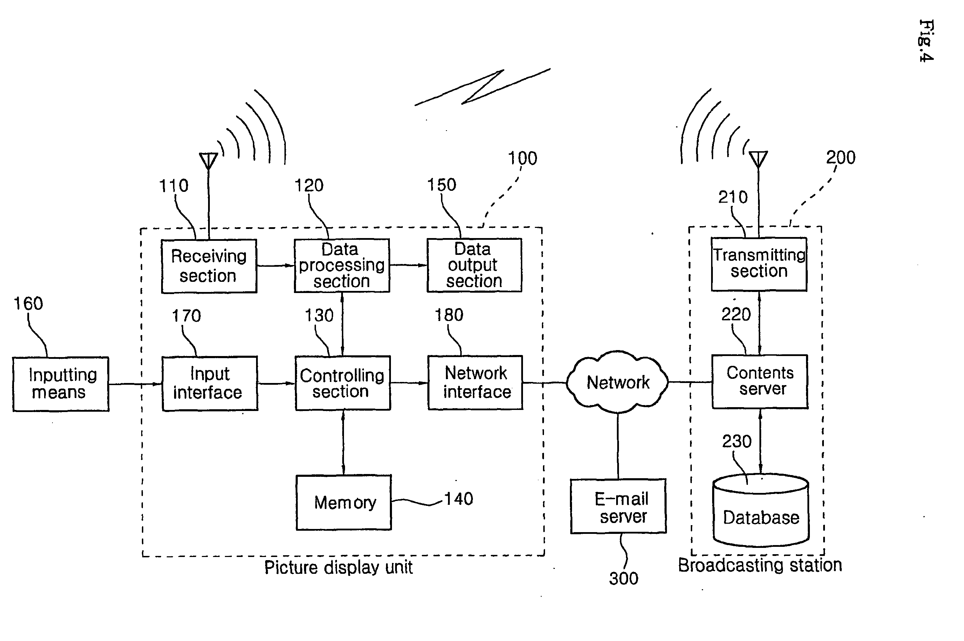

Figure 4 is a block diagram of the digital broadcasting system according to another preferred embodiment of the present invention.

As shown in Figure 4, the digital broadcasting system makes it possible for a viewer to transmit additional information directly to an e-mail server 300 from a picture display unit 100 without going through a broadcasting station 200. Here, the e-mail server 300 saves additional information transmitted from the picture display unit 100 through the network. The reason why the unit is manifested in Figure 4, not in Figure 1, is to provide an easier way to explain the procedure of directly receiving additional information transmitted from the picture display unit 100 without going through a broadcasting station 200. Hence, although the e-mail server is not shown in Figure 1, it is necessary to understand that the server plays an important role in Figure 1, in which the contents server of the broadcasting station receives a request for transmitting additional information from the picture display unit and the e-mail server fetches additional information in the database and saves the information.

To briefly explain Figure 4, data information received by a receiving section 110 is classified by a data processing section 120 into video information, audio information, or additional information etc. Here, the data information does not have a destination address. That is, the broadcasting system shown in Figure 4 does not require a destination address of a contents server in the broadcasting station 200 since additional information from a picture display unit 100 is transmitted directly to an e-mail address without going through a broadcasting station 200. Meanwhile, the video and audio information are outputted through a data output section 150, respectively, and the additional information is saved in a memory 140 by a controlling section 130. The additional information is saved in the memory 140 to be in correspondence with an identifier. If there is additional information in video information being displayed on a screen of the data output section 150, the controlling section 130 detects this and makes an additional information existence identifier be outputted on the screen. Then, a viewer finds out that there is additional information based on the screen and makes a request for confirming additional information through an inputting means 160, and the controlling section 130 outputs corresponding additional information requested of the viewer on the screen.

In the meantime, if the viewer wishes to save the additional information outputted on the screen and makes a request for transmitting the additional information (here, the request for transmitting the additional information can be made from the picture display unit 100 by using an e-mail address), the controlling section 130 recognizes the request. And, the controlling section 130, based on an identifier corresponding to the additional information, fetches additional information saved in the memory 140, and then transmits the information to an e-mail server 300 corresponding to the e-mail address. The e-mail server 300 can save the additional information received, and the viewer can confirm the additional information saved in the e-mail server 300 later by using the e-mail address.

Therefore, the broadcasting system according to another embodiment of the present invention is different from the system illustrated in Figure 1 in that upon receiving a request of a viewer for transmitting additional information, a controlling section uses an identifier corresponding to the additional information requested in order to fetch the additional information from a memory and transmits the information to an e-mail server by using an e-mail address the viewer inputted. However, according to the broadcasting system shown in Figure 1, after receiving a request of a viewer, the controlling section transmits the request to a contents server of a broadcasting station, fetches additional information from a database by using an identifier saved in the contents server, and transmits the additional information to an e-mail address included in the request. In other words, the system of Figure 1 transmits additional information found in a database of a broadcasting station to an e-mail address, while the system according to another embodiment of the present invention transmits the additional information directly to an e-mail address without going though a broadcasting station.

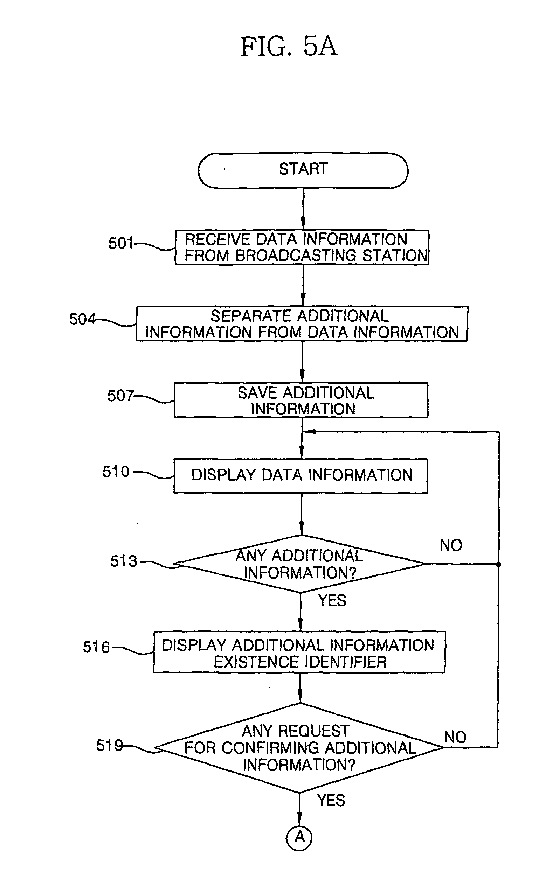

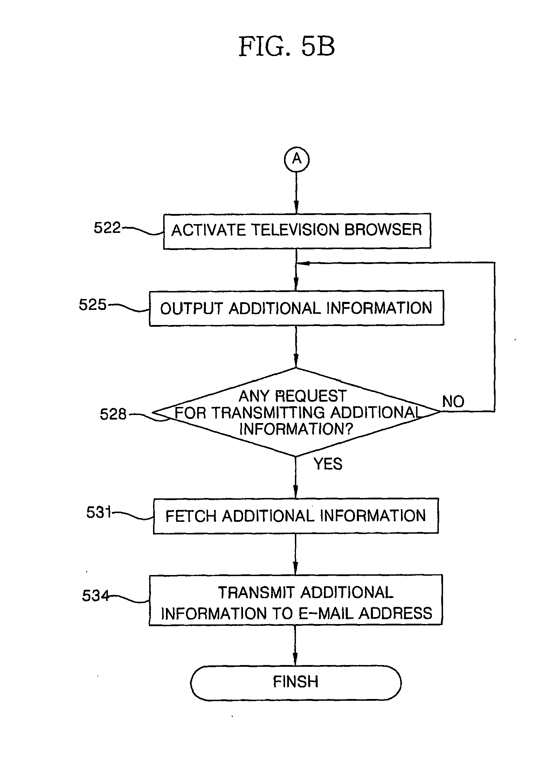

Figures 5a and 5b are flow charts explaining methods for transmitting additional information requested of the viewer directly to a particular e-mail address according to the digital broadcasting system of another preferred embodiment of the present invention.

With reference to Figures 5a and 5b, data information is received from a broadcasting station (S501). The step 501 is almost same with the step 401 in Figure 2a except that the data information here includes audio information, video information, additional information, and optionally a destination address. The destination address indicates an address of a contents server in a broadcasting station. However, according to another preferred embodiment of the present invention, in case of transmitting additional information via e-mail, the destination address is not absolutely necessary because the additional information is transmitted directly to an e-mail address, not requiring a separate address of a contents server.

When a receiving section receives the data information, a data processing section classifies the data information (S514). Here, the step 504 is the same with the step 404 in Figure 2a. Namely, the data processing section classifies the data information into audio information, video information and additional information.

The additional information separated form the step 504 is saved in a memory by a controlling section. The controlling section watches over the data processing section, and if there is additional information in the data information, it transmits the additional information to the memory for saving.

The video and audio information are displayed through a data output section (S510). Here, the data output section, as described above, can include a speaker and a display device. Since the step 510 is identical with the step 410 in Figure 2a, the details are not explained here.

On the other hand, when the receiving section receives video information, the controlling section decides whether or not additional information is included in the video information being displayed currently (S513). If it turns out that there is additional information in the memory, the controlling section displays an additional information existence identifier on a screen of the display device (S516). The controlling section decides if a viewer has made a request for confirming additional information through an inputting means (S519). Here, since the steps 513, 516 and 519 are the same with the steps 413, 416 and 419 in Figure 2a, respectively, more details can be found above.

If the viewer actually made a request for confirming additional information, the controlling section, in response to the request, activates a TV browser saved in the memory (S522). When a browser screen of the TV browser is assigned a picture region and an additional information region by the data processing section, the controlling section fetches additional information corresponding to the video information being displayed currently and outputs the additional information through the additional information region (S525). The details on the steps 522 and 525 are not explained here since they are already explained in the steps 422 and 425 in Figure 2b.

The controlling section decides whether or not a viewer requests for transmitting additional information (S528). That is, if the viewer wishes to save a certain information via e-mail, e.g., geography information or travel information as shown in Figure 3c, he or she can request for transmitting additional information from a picture display unit. As explained in Figure 3e, the viewer selects a transmission route designating item, inputs an e-mail address where he or she wants to send the additional information, and selects a next confirmation item, thereby activating the request. Once a viewer makes a request for transmitting the additional information, the controlling section continuously watches over the inputting means to find out if the viewer makes a request.

When a request of the viewer for transmitting the additional information is received, the controlling section fetches additional information (S531). In other words, the controlling section, based on the request, confirms an identifier for the additional information the viewer requested, and fetches additional information corresponding to the identifier from a memory by using the identifier. The identifier decides whether the additional information being outputted through a TV browser in response to the controlling section upon the receipt of the request of the viewer is the same with the additional information the viewer requested. Therefore, it is important for the controlling section to remember an additional information identifier corresponding to different additional information. For instance, if the viewer selects additional information on traffic information in Figure 3e and an identifier for the traffic information is 7, the controlling section should be able to fetch additional information corresponding to the identifier 7 from a memory.

The fetched additional information is then transmitted to an e-mail address the viewer has inputted in advance (S534).

Therefore, a picture display unit recognizes a request of a viewer for transmitting additional information, fetches additional information corresponding to the request from a memory, and transmits the information to an e-mail address. In this way, it is not necessary to go though a broadcasting station and a viewer can always save additional information he or she wants into an e-mail.

### Industrial Applicability

While the invention has been shown and described with reference to certain preferred embodiments thereof, it will be understood by those skilled in the art that various changes in form and details may be made therein without departing from the scope of the invention as defined by the appended claims.
As explained above, a system for digital broadcasting and a control method thereof in the present invention help a viewer to transmit additional information into an e-mail address whenever he or she wants, and further, improve applicability of additional information.
According to the digital broadcasting system and the control method thereof in the present invention, a viewer does not have to save additional information he or she wants into a TV, thereby solving a problem of storage capacity of TV, and the system itself is very cost-effective since additional storage device is not necessary.
In addition, since additional information is transmitted directly to a particular e-mail address without going through a broadcasting station, any problem occurring because of direct transmission of the information by TV is solved and a viewer can enjoy clearer broadcast.

## Claims

1. A method for transmitting additional information by using a picture display unit that receives and outputs data information from a broadcasting station in response to a request of a television viewer, the method further comprising the steps of:
- the picture display unit receiving the data information from the broadcasting station, and the data information including an additional information identifier and a destination address corresponding to the additional information included in the data information
- the picture display unit separating the additional information from the data information;
- inputting a viewer selected email address;
- the picture display unit outputting the additional information on a screen in response to a request of the viewer for confirming the additional information;
- the picture display unit recognizing the request of the viewer for transmitting the additional information;
- the picture display unit transmitting the request for transmitting the additional information to the broadcasting station, and
- the additional information being sent to the viewer selected email address by the broadcasting station corresponding to the destination address, in response to the request,
wherein the transmitted request includes the viewer selected email address, the additional information identifier and a the destination address corresponding to the additional information.

2. The method according to claim 1, wherein the data information further includes at least one of a video information and an audio information.

3. The method according to claim 2, which method further comprises the steps of :
- outputting the video information and the audio information separated from the data information, respectively;
- deciding existence of the additional information based on the video information outputted; and
- displaying an additional information existence identifier on the screen in case the additional information exists.

4. The method according to claim 1, the method further comprising the steps of :
- activating a television browser in response to the request of confirming additional information before outputting the additional information;
- assigning a picture region and an additional information region to the television browser; and
- outputting the video and additional information corresponding to the video region and the additional information region, respectively.

5. The method according to claim 1, wherein the request for transmitting the additional information is transmitted through a network by using the designation address.

6. The method according to claim 1, for transmitting additional information by a broadcasting station connected to the picture display unit and a network, the method comprising the steps of:
- the broadcasting station receiving the request for transmitting additional information from the picture display unit;
- the broadcasting station inquiring additional Information of a database by using the additional information identifier; and
- the broadcasting station transmitting the inquired additional information to the viewer selected e-mail address included in the request.

7. The method according to claim 6, wherein the additional information is saved to be in correspondence with the additional information identifier.

8. The method according to claim 6, wherein the request for transmitting additional information is received by the broadcasting station corresponding to the destination address.

9. A method according to claim 1, for transmitting the additional information received by the picture display unit
- the picture display unit transmitting additional information to the viewer selected email address included in the request, the additional information being feted based on the request of the viewer for transmitting the additional information.

10. A broadcasting station system adapted for transmitting additional information In response to a request sent from a picture display unit according to any of the claims 12-14, the system comprising:
- an outputting means for outputting data Information;
- a contents server for inquiring an additional information based on an additional information identifier and for transmitting the inquired additional information to a viewer selected e-mail address upon receiving a request for transmitting the additional information from the picture display unit; and
- a database for saving an audio information, a video information, an additional information and a destination address, particularly making the additional information saved be in correspondence with an additional information identifier assigned,
wherein the request for transmitting additional information includes at the destination address, the additional information identifier and the viewer selected e-mail address, and the request is received by the broadcasting station corresponding to the destination address.

11. The system according to claim 10, wherein the contents server fetches the audio information, the video information, the additional information and the destination address, converts the audio and video information to digital signals and compresses the converted information together with the additional information and the destination address.

12. A picture display unit adapted for receiving and outputting, in response to a request of a television viewer, data information from a broadcasting station system, the unit comprising:
- a data processing means for classifying the data information inputted through a receiving means, and in case that a television browser is activated, for mapping a video information and an additional information to be displayed through a corresponding region on the television browser;
- inputting means for inputting a viewer selected email address:
- a controlling means for saving the additional information separated from the data processing means, and in case that a request for transmitting the additional information is made, for transmitting the additional information to a viewer selected e-mail address; and
- a saving means for saving the additional information into a corresponding identifier,
wherein the request for transmitting additional information includes a destination address, an additional information identifier and the e-mail address, and the request is received by a broadcasting station corresponding to the destination address.

13. The picture display unit of claim 12, wherein the controlling means discriminates the additional information being outputted through a television browser currently upon receiving the request for transmitting additional information, and outputs the additional information corresponding to the identifier by using an additional information identifier.

14. The picture display unit of claim 12, wherein the controlling section remembers an additional information identifier corresponding to additional information in advance.

## Patentansprüche

1. Verfahren zur Übertragung von zusätzlicher Information unter Verwendung eines Bildanzeigegeräts, welches als Antwort auf eine Anfrage von einem Fernsehzuschauer Dateninformation von einer Rundsendestation empfängt und ausgibt, welches Verfahren ferner die folgenden Schritte umfasst:
- das Bildanzeigegerät empfängt die Dateninformation von der Rundsendestation, und die Dateninformation enthält einen Identifikator von zusätzlicher Information und eine Zieladresse, welche der in der Dateninformation enthaltenen zusätzlichen Information entspricht;
- das Bildanzeigegerät trennt die zusätzliche Information von der Dateninformation;
- eine vom Zuschauer ausgewählte E-Mail-Adresse wird eingegeben;
- das Bildanzeigegerät gibt als Antwort auf eine Anfrage des Zuschauers auf eine Bestätigung der zusätzlichen Information die zusätzliche Information auf einem Schirm aus;
- das Bildanzeigegerät erkennt die Anfrage des Zuschauers auf Übertragung der zusätzlichen Information;
- das Bildanzeigegerät überträgt die Anfrage auf Übertragung der zusätzlichen Information an die Rundsendestation, und
- die zusätzliche Information wird als Antwort auf die Anfrage an die der Zieladresse entsprechende, vom Zuschauer ausgewählte E-Mail-Adresse durch die Rundsendestation gesendet,
wobei die übertragene Anfrage die vom Zuschauer ausgewählte E-Mail-Adresse, den Identifikator der zusätzlichen Information und die der zusätzlichen Information entsprechende Zieladresse enthält.

2. Verfahren nach Anspruch 1, wobei die Dateninformation ferner mindestens eine aus einer Videoinformation und einer Audioinformation umfasst.

3. Verfahren nach Anspruch 2, welches Verfahren ferner die folgenden Schritte umfasst:
- Ausgabe der von der Dateninformation getrennten Videoinformation bzw. Audioinformation;
- Bestimmen des Vorliegens der auf der ausgegebenen Videoinformation basierenden zusätzlichen Information; und
- Anzeigen eines Identifikators des Vorliegens einer zusätzlichen Information auf dem Schirm im Falle eines Vorliegens der zusätzlichen Information.

4. Verfahren nach Anspruch 1, welches Verfahren ferner die folgenden Schritte umfasst:
- Aktivieren eines TV-Browsers als Antwort auf die Anfrage auf Bestätigung zusätzlicher Information vor Ausgabe der zusätzlichen Information;
- Zuordnen eines Bildbereichs und eines Bereichs der zusätzlichen Information zum TV-Browser; und
- Ausgabe der dem Videobereich bzw. dem Bereich der zusätzlichen Information entsprechenden Videoinformation bzw. zusätzlichen Information.

5. Verfahren nach Anspruch 1, wobei die Anfrage auf Übertragung der zusätzlichen Information durch ein Netzwerk unter Verwendung der Designierungsadresse übertragen wird.

6. Verfahren nach Anspruch 1 zur Übertragung von zusätzlicher Information durch eine an das Bildanzeigegerät und ein Netzwerk angeschlossene Rundsendestation, welches Verfahren die folgenden Schritte umfasst:
- die Rundsendestation empfängt die Anfrage auf Übertragung zusätzlicher Information von dem Bildanzeigegerät;
- die Rundsendestation fragt nach zusätzlicher Information bei einer Datenbank unter Verwendung des Identifikators der zusätzlichen Information; und
- die Rundsendestation überträgt die gefragte zusätzliche Information an die in der Abfrage enthaltene, vom Zuschauer ausgewählte E-Mail-Adresse.

7. Verfahren nach Anspruch 6, wobei die zusätzliche Information gespeichert wird, um mit dem Identifikator der zusätzlichen Information in Übereinstimmung zu sein.

8. Verfahren nach Anspruch 6, wobei die Anfrage auf Übertragung zusätzlicher Information von der Rundsendestation in Übereinstimmung mit der Zieladresse empfangen wird.

9. Verfahren nach Anspruch 1 zur Übertragung der durch das Bildanzeigegerät empfangenen zusätzlichen Information
- wobei das Bildanzeigegerät zusätzliche Information an die in der Anfrage enthaltene, vom Zuschauer ausgewählte E-Mail-Adresse überträgt, wobei die zusätzliche Information auf der Basis der Anfrage des Zuschauers auf Übertragung der zusätzlichen Information abgerufen wird.

10. Rundsendestationssystem, welches als Antwort auf eine von einem Bildanzeigegerät nach einem der Ansprüche 12 bis 14 gesendete Anfrage zur Übertragung von zusätzlicher Information ausgebildet ist, welches System umfasst:
- ein Ausgabemittel zur Ausgabe von Dateninformation;
- einen Inhaltsserver zur Abfrage einer auf einem Identifikator einer zusätzlichen Information basierenden zusätzlichen Information und zur Übertragung der gefragten zusätzlichen Information an eine vom Zuschauer ausgewählte E-Mail-Adresse auf Empfang einer Anfrage auf Übertragung der zusätzlichen Information von dem Bildanzeigegerät; und
- eine Datenbank zur Speicherung einer Audioinformation, einer Videoinformation, einer zusätzlichen Information und einer Zieladresse, wobei insbesondere vorgesehen wird, dass die gespeicherte zusätzliche Information mit einem zugeordneten Identifikator von zusätzlicher Information in Übereinstimmung ist,
- wobei die Anfrage auf Übertragung von zusätzlicher Information die Zieladresse, den Identifikator der zusätzlichen Information und die vom Zuschauer ausgewählte E-Mail-Adresse enthält, und die Anfrage von der Rundsendestation in Übereinstimmung mit der Zieladresse empfangen wird.

11. System nach Anspruch 10, wobei der Inhaltsserver die Audioinformation, die Videoinformation, die zusätzliche Information und die Zieladresse abruft, die Audio- und Videoinformation in digitale Signale umwandelt und die umgewandelte Information zusammen mit der zusätzlichen Information und der Zieladresse komprimiert.

12. Bildanzeigegerät, welches, als Antwort auf eine Anfrage eines Fernsehzuschauers, zum Empfang und zur Ausgabe von Dateninformation von einem Rundsendestationssystem ausgebildet ist, welches gerät umfasst:
- ein Datenverarbeitungsmittel zum Klassifizieren der durch ein Empfangmittel eingegebenen Dateninformation, und, im Falle eines Aktivierens eines TV-Browsers, zum Mapping einer Videoinformation und einer zusätzlichen Information, welche über einen entsprechenden Bereich des TV-Browsers angezeigt werden sollen;
- Eingabemittel zur Eingabe einer vom Zuschauer ausgewählten E-Mail-Adresse;
- ein Steuerungsmittel zur Speicherung der von dem Datenverarbeitungsmittel getrennten zusätzlichen Information, und, im Falle des Vorliegens einer Anfrage auf Übertragung der zusätzlichen Information, zur Übertragung der zusätzlichen Information an eine vom Zuschauer ausgewählte E-Mail-Adresse; und
- ein Speicherungsmittel zur Speicherung der zusätzlichen Information in einem entsprechenden Identifikator,
wobei die Anfrage auf Übertragung zusätzlicher Information eine Zieladresse, einen Identifikator zusätzlicher Information und die E-Mail-Adresse umfasst, und die Anfrage von einer eine Rundsendestation in Übereinstimmung mit der Zieladresse empfangen wird.

13. Bildanzeigegerät nach Anspruch 12, wobei das Steuerungsmittel auf Empfang der Anfrage auf Übertragung zusätzlicher Information die derzeit über durch einen TV-Browser ausgegebene zusätzliche Information unterscheidet, und unter Verwendung eines Identifikators der zusätzlichen Information die zusätzliche Information in Übereinstimmung mit dem Identifikator ausgibt.

14. Bildanzeigegerät nach Anspruch 12, wobei der Steuerungsabschnitt einen Identifikator von zusätzlicher Information in Übereinstimmung mit der zusätzlichen Information vorab im Gedächtnis behält.

## Revendications

1. Procédé pour transmettre des informations supplémentaires à l'aide d'une unité d'affichage d'image qui reçoit et fait sortir des informations de données provenant d'une station de radiodiffusion en réponse à une demande faite par un téléspectateur, le procédé comprenant en outre les étapes consistant à:
- l'unité d'affichage d'image recevant les informations de données depuis la station de radiodiffusion, et les informations de données comprenant un identificateur d'informations supplémentaires et une adresse de destination correspondant aux informations supplémentaires comprises dans les informations de données,
- l'unité d'affichage d'image séparant les informations supplémentaires des informations de données;
- faisant entrer une adresse de courrier électronique sélectionnée par un téléspectateur;
- l'unité d'affichage d'image faisant sortir les informations supplémentaires sur un écran en réponse à une demande faite par le téléspectateur pour confirmer les informations supplémentaires;
- l'unité d'affichage d'image reconnaissant la demande du téléspectateur pour transmission des informations supplémentaires;
- l'unité d'affichage d'image transmettant la demande pour transmission des informations supplémentaires à la station de radiodiffusion, et
- les informations supplémentaires étant transmises à l'adresse de courrier électronique sélectionnée par le téléspectateur et correspondant à l'adresse de destination en réponse à la demande,
la demande transmise comprenant l'adresse de courrier électronique sélectionnée par le téléspectateur et correspondant aux informations supplémentaires.

2. Procédé selon la revendication 1, dans lequel les informations de données en outre comprennent au moins l'une d'une information vidéo et une information audio.

3. Procédé selon la revendication 2, procédé qui comprend en outre les étapes consistant à:
- faire sortir respectivement l'information vidéo et l'information audio séparées des informations de données;
- décider l'existence des informations supplémentaires sur la base de l'information vidéo sortie; et
- afficher un identificateur de l'existence d'informations supplémentaires sur l'écran dans le cas où les informations supplémentaires existeraient.

4. Procédé selon la revendication 1, procédé qui comprend en outre les étapes consistant à:
- activer un logiciel de navigation de télévision en réponse à la demande de confirmation d'informations supplémentaires avant la sortie des informations supplémentaires;
- assigner une région d'image et une région d'informations supplémentaires pour le logiciel de navigation de télévision; et
- faire sortir les informations vidéo et supplémentaires correspondant à respectivement la région vidéo et la région d'informations supplémentaires.

5. Procédé selon la revendication 1, dans lequel la demande pour transmission des informations supplémentaires est transmise par le réseau en utilisant l'adresse de désignation.

6. Procédé selon la revendication 1, pour la transmission des informations supplémentaires par une station de radiodiffusion reliée à une unité d'affichage d'image et à un réseau, le procédé comprenant les étapes consistant à:
- la station de radiodiffusion recevant la demande pour transmission d'informations supplémentaires provenant de l'unité d'affichage d'image;
- la station de radiodiffusion demandant des informations supplémentaires d'une base de données en utilisant l'identificateur d'informations supplémentaires; et
- la station de radiodiffusion transmettant les informations supplémentaires demandées à l'adresse de courrier électronique sélectionnée par le téléspectateur comprise dans la demande.

7. Procédé selon la revendication 6, dans lequel les informations supplémentaires sont enregistrées pour être en correspondance avec l'identificateur d'informations supplémentaires.

8. Procédé selon la revendication 6, dans lequel la demande pour transmettre des informations supplémentaires est reçue par une station de radiodiffusion correspondant à l'adresse de destination.

9. Procédé selon la revendication 1, pour la transmission des informations supplémentaires reçues par l'unité d'affichage d'image
- l'unité d'affichage d'image transmettant des informations supplémentaires à l'adresse de courrier électronique sélectionnée par le téléspectateur comprise dans la demande, les informations supplémentaires étant annulées sur la base de la demande de transmission des informations supplémentaires par le téléspectateur.

10. Système de station de radiodiffusion adapté pour transmettre des informations supplémentaires en réponse à une demande transmise à partir d'une unité d'affichage d'image selon l'une quelconque des revendications 12 à 14, le système comprenant:
- un moyen de sortie pour faire sortir des informations de données;
- un serveur de contenu pour demander des informations supplémentaires sur la base d'un identificateur d'informations supplémentaires et pour transmettre les informations supplémentaires demandées à une adresse de courrier électronique sélectionnée par le téléspectateur après avoir reçu une demande pour transmettre les informations supplémentaires provenant de l'unité d'affichage d'image; et
- une base de données pour enregistrer une information audio, une information vidéo, des informations supplémentaires et une adresse de destination, en particulier en faisant les informations supplémentaires enregistrées en correspondance avec un identificateur d'informations supplémentaires attribué,
dans lequel la demande pour transmettre les informations supplémentaires comprend l'adresse de destination, l'identificateur d'informations supplémentaires et l'adresse de courrier électronique sélectionnée par le téléspectateur, et la demande est reçue par la station de radiodiffusion correspondant à l'adresse de destination.

11. Système selon la revendication 10, dans lequel le serveur de contenu extrait l'information audio, l'information vidéo, les informations supplémentaires et l'adresse de destination, convertit l'information audio et vidéo en signaux numériques et fait comprimer l'information convertie en même temps que les informations supplémentaires et l'adresse de destination.

12. Unité d'affichage d'image destinée à recevoir et sortir, en réponse à une demande d'un téléspectateur, des informations de données provenant d'un système de station de radiodiffusion, l'unité comprenant:
- un moyen de traitement de données pour classer l'information de données entrée par l'intermédiaire d'un moyen de réception, et dans le cas où un logiciel de navigation de télévision serait activé, pour cartographier une information vidéo et une information supplémentaire à être affichées à travers une région correspondante sur le logiciel de navigation de télévision;
- un moyen d'entrée pour faire entrer l'adresse de courrier électronique sélectionnée par le téléspectateur;
- un moyen de contrôle pour l'enregistrement des informations supplémentaires, séparé des moyens de traitement de données, et dans le cas où une demande de transmission des informations supplémentaires serait effectuée, pour transmettre les informations supplémentaires à une adresse de courrier électronique sélectionnée par le téléspectateur; et
- un moyen d'enregistrement pour faire enregistrer les informations supplémentaires dans un identificateur correspondant,
dans lequel la demande pour transmettre les informations supplémentaires comprend une adresse de destination, un identificateur d'information supplémentaire et l'adresse de courrier électronique, et la demande est reçue par une station de radiodiffusion correspondant à l'adresse de destination.

13. Unité d'affichage d'image selon la revendication 12, dans laquelle le moyen de contrôle discrimine les informations supplémentaires étant sorties par le biais d'un logiciel de navigation de télévision successivement lors de la réception de la demande pour transmettre des informations supplémentaires, et fait sortir les informations supplémentaires correspondant à l'identificateur en utilisant un identificateur d'informations supplémentaires.

14. Unité d'affichage d'image selon la revendication 12, dans lequel la section de commande mémorise un identificateur d'informations supplémentaires correspondant à des informations supplémentaires à l'avance.
